# EUROPEAN PATENT APPLICATION

(11) **EP 1 167 931 A2**
(43) Date of publication of application: **02.01.2002**
(21) Application number: 01303747.8
(22) Date of filing: 25.04.2001
(51) Int. Cl.: G01G 19/44

(54) **Patient weight monitoring system**

(30) Priority: 30.06.2000 GB 0015931
(71) Applicant: Ferno (UK) Limited, Cleckheaton, West Yorkshire BD19 4TZ (GB)
(72) Inventor: Saleem, Shahid, Cleckheaton, West Yorkshire BD19 4TZ (GB)
(74) Representative: Sherrard-Smith, Hugh

(57) **Abstract**

A person sitting on a stretcher or a chair has their weight taken by a board 10. That weight is transferred to pistons 20 to urge those pistons 20 down into liquid containers 16 to increase the pressure. The increased pressure from the action of the pistons is passed through to a control and display device 24 to give an indication of the weight of the patient which may comprise an alarm if a predetermined weight is exceeded.

## Description

The present invention relates to monitoring patient support apparatus and a method of monitoring patient support apparatus.

With stretcher trolleys, attendants often have to lift the stretcher, either from a lower position to a higher position or into and out of ambulances. The attendants are thus required to exert a significant physical effort. Similarly, with patient transport chairs the attendants often have to lift the chairs upstairs and downstairs. If a patient is excessively heavy this can result in back injuries to the attendants. Furthermore, it is possible that the trolleys themselves may not be designed to be sufficiently strong to support excessively heavy patients and whilst the trolleys and chairs may satisfactorily support the patients when they are stationery, it may be that excessive strains that could cause failure of the stretchers or chairs and damage to the patient may result during movement.

It is an object of the present invention to attempt to overcome at least some of the above described or other disadvantages.

According to a first aspect of the present invention patient support apparatus comprises patient support means arranged, in use, to support a patient and a plurality of monitoring means arranged, in use, to provide an indication of the weight of a patient on the support means.

The apparatus may include control means arranged to receive a signal from the monitoring means and to give an indication of the weight of a patient on the support means. Such means may be selectively operable to activate the control means. When the switch is in one position, an indication may be given of the weight of a patient on the stretcher. When the switch is in another position, no indication may be given. The switch may be biased to said another position. The control means may be battery powered.

The indication of the weight of a patient may comprise a sound or, alternatively or additionally, a visual warning if the patient exceeds a predetermined weight or, alternatively or additionally, a visual indication of the weight of the patient, for instance by an LED. The predetermined weight may be arranged to be set at one of a plurality of values, for instance in dependence upon the apparatus or load carrying abilities of the operator.

The control means may be arranged to compensate for a signal given by the monitoring means before a patient is located on the stretcher.

Each of the monitoring means may be spaced from each other, and may be evenly spaced from each other.

A signal from each monitoring means may be added together.

The monitoring means may comprise fluid monitoring means such as hydraulic monitoring means.

The apparatus may comprise a first support arranged to receive the weight of a patient on the support means. The first support may be mounted on monitoring means and may be solely supported by monitoring means. The first support and the monitoring means may comprise a unit which may be enclosed and alternatively or additionally, may be upholstered.

When the monitoring means comprises fluid monitoring means, each monitoring means may include a portion that is movable downwardly to increase pressure on a fluid when a patient is supported on the support means. Each fluid monitoring means may comprise a flexible container of fluid. A flexible wall of the container may be arranged to be moved downwardly by said portion that is movable downwardly.

Each monitoring means may comprise a strain gauge such as an electronic strain gauge.

The apparatus may include projections that are arranged to be supported on further portions of the apparatus with means for monitoring the strain on the projections to provide an indication of the weight of a patient on the support means.

The projections may be movable from a position in which they are spaced from the supports to a position in which they are located on the supports. The projections and the supports may include cooperating portions arranged to assist in retaining or, alternatively or additionally, to assist in aligning the projections and the supports.

The projections may be secured to an upper frame of a stretcher trolley which upper frame is movable from a raised to a lowered position in which, in the lowered position, the projections are located on the supports.

The transport means may comprise a chair or a stretcher trolley and may comprise patient transport means.

According to a further aspect of the present invention a method of monitoring patient support apparatus comprises locating a patient on a support of the apparatus and monitoring the weight of the patient with a plurality of monitoring means to provide an indication of the weight of the patient on the support.

The method may comprise using control means to receive a signal from the monitoring means and giving an indication of the weight of the patient on the support. The method may comprise selectively operating the control means.

The method may comprise giving an audible or, alternatively or additionally, a visual warning when the weight of the patient exceeds a predetermined weight. Alternatively or additionally, the indication may comprise a visual indication of the weight of the patient, for instance by an LED. The method may comprise varying the value of the predetermined weight.

The method may comprise taking the weight of the apparatus exerted on the monitoring means into account such that the weight of the patient only is monitored.

The method may comprise receiving different signals from different monitoring means, in dependence upon where the patient is located on the support in order to give an indication of the weight of the patient on the support regardless of where on the support the patient is located. The method may comprise adding the signals from each of the monitoring means together.

The method may comprise supporting the support with each of the monitoring means and causing fluid in each of the monitoring means to have their pressure increased when the weight of the support above a particular monitoring means is increased.

The method may comprise monitoring the weight of the patient with strain gauges that comprise the monitoring means.

The method may comprise mounting the support on portions that each include a strain gauge or alternatively or additionally a load cell whereby those portions are subject to the weight of a patient located on the support with the signals from the strain gauges being used to give an indication of the weight of the patient. The method may comprise moving those portions downwardly into a position in which they are able to support the weight of a patient located on the support.

The present invention also includes a method of monitoring patient support apparatus when the apparatus is as herein referred to.

The present invention includes any combination of the herein referred to features or limitations.

The present invention can be carried into practice in various ways but several embodiments will now be described, by way of example, and with reference to the accompanying drawings, in which:
Figure 1 is a schematic perspective view of a stretcher platform incorporating a load monitoring arrangement;
Figure 2 is a detailed cross-sectional view of one of the load measuring portions used on the platform of Figure 1;
Figure 3 is a schematic perspective view of a load monitoring arrangement used in relation to a chair;
Figure 4 is a perspective view of a stretcher in a raised position;
Figure 5 is a side view of the stretcher of Figure 4 shown in a collapsed position, and
Figure 6 is a detail of a load measuring device used on the stretcher shown in Figures 4 and 5.

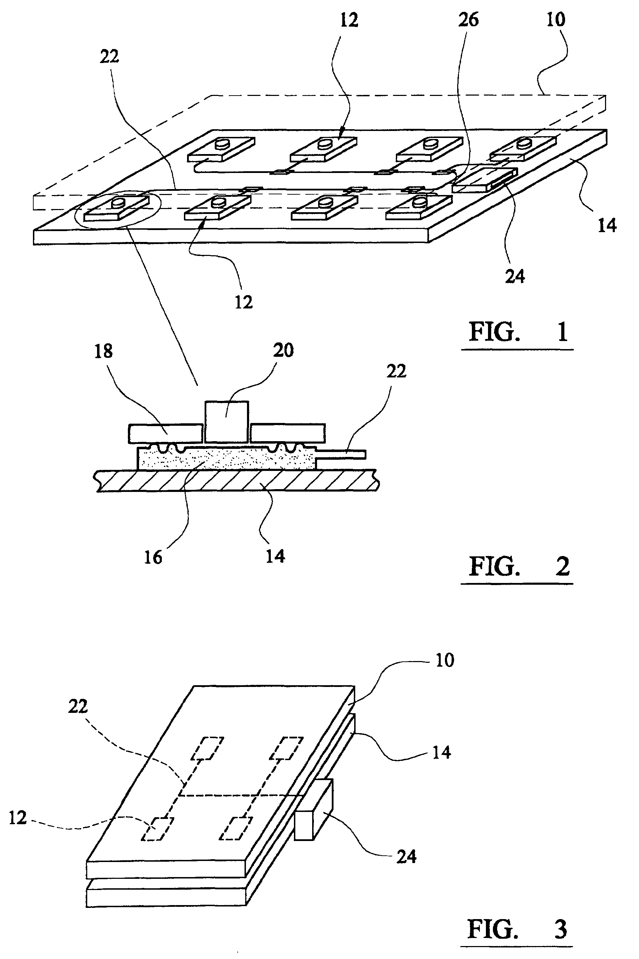

As shown in Figure 1, an upper board 10 is supported on eight evenly distributed load cell or strain monitoring devices 12 that are mounted on a lower board 14. In use, the lower board could be supported by or attached to a bed or a stretcher. The upper board 10 could have a mattress comprising part of that board or a patient support mattress mounted on top of the board.

Each of the load cells 12 comprises a flexible liquid container 16 that is secured to the lower board 14 with an upper plate 18 being located over the liquid container 16. The plate 18 includes a centrally located opening through which a piston 20 extends such that the lower portion of the piston 20 abuts against the liquid container 16 with the upper board 10 resting on the upwardly facing surface of the piston 20. A connecting tube 22 extends from each load cell 12 towards a control and display device 24. As the connecting tubes 22 from the furthermost load cells 12 go past connecting devices on the same side of the board that are nearer to the control and display device 24, the tubes meet up until finally all of the tubes are in connection with a tube 26 that projects from the rear of the control and display device 24.

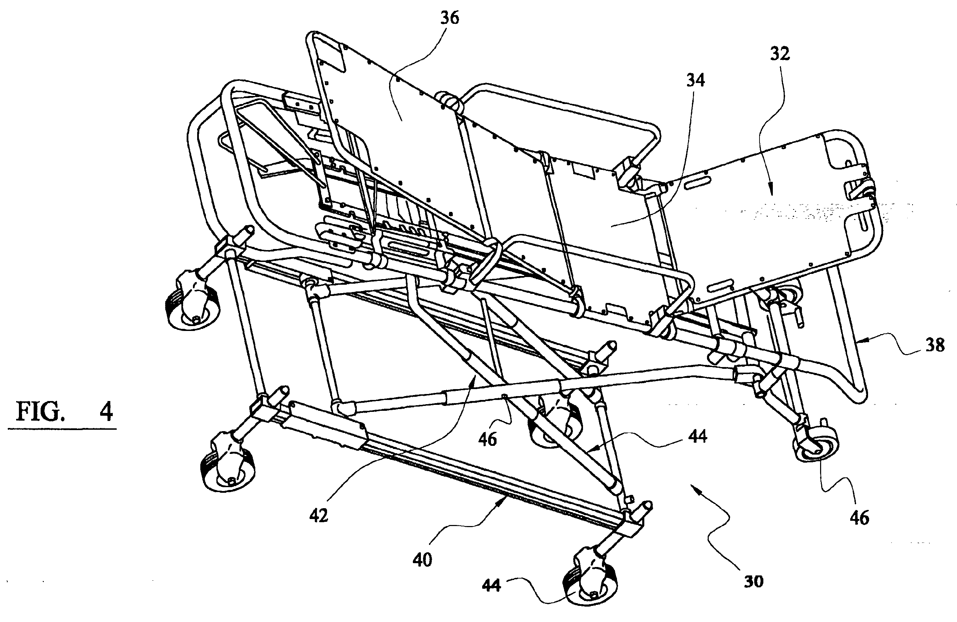

The load cells 12, shown in Figure 3, are also evenly distributed about the lower board 14 and the upper board 10 is supported on the pistons 20 from the load devices. The lower board can comprise part of or be connected to or rest on a chair. The upper board 110 can be upholstered or it can have a cushion located or attached to it.

When a person sits directly or indirectly on the stretcher or chair such that their weight is taken by the board 10, that weight is transferred to the pistons 20 to urge the pistons 20 down into the liquid containers 16 to increase the pressure in the system. That increased pressure is passed through to the control and display device 24. In the case of the stretcher this device is mounted at one end. In the case of the seat, this device is mounted at the side.

The control and display device would be aware of the weight that is on the board 10 comprising not only the weight of the board but also any upholstery before a person gets onto the stretcher. With a person supported on the stretcher, and when a button is pressed, the control and display device will give either a direct reading in kilograms for example of the weight of the person or, alternatively or additionally, it can indicate that an excess weight is located on the stretcher such that it would not be safe either to lift the stretcher or to move the stretcher or to have the person located on the stretcher. The indication may, for instance, be simply a safe indication or an unsafe indication such as a green or red light respectively. Similar indications may be given in relation to the chair control and display device. Alternatively or additionally an audible or visual alarm or both may be given when a predetermined load is exceeded. The control and display device may have an LED output. The control and display device may be battery operated which battery may be rechargeable or replaceable.

Both the upper and lower boards 10 and 14 in either embodiment can be encased in fabric to provide what appears to be a unitary item.

If a person were to sit at one end of the stretcher or chair then obviously the pistons 20 at that end would be further depressed than the pistons 20 at the other end. Nevertheless, the overall pressure increase in the system that eventually passes through the tube 26 still gives a reasonably accurate indication of the weight of the person.

Although the liquid container 16 has been described as being a flexible container, it will be appreciated that the base, sides and perhaps the majority of the top of the container could be rigid. This can be achieved by locating a sack of liquid therein with only the top of the container having access for the piston 20 to bear directly against the flexible portion.

The liquid may comprise a relatively incompressible fluid such that a person sitting on the stretcher or chair does not notice any movement between the boards 10 and 14 and such that the system operates in much the same way as a conventional stretcher or chair that is used in relation to patient handling.

The embodiment described in relation to Figures 4 to 6 may have any of the modifications or features of the earlier described embodiments.

As shown in Figure 4, a stretcher trolley 30 includes patient support sections comprising a head end 32, a mid section 34 and a foot end section 36. Each of these sections can be folded flat and have the load measuring arrangement shown in Figure 1 mounted on top of all of the sections or only on the sections 34 and 36, if desired.

A stretcher trolley 30 includes an upper frame 38, to which the sections 32, 34 and 36 are connected, and a lower frame 40. The frames are connected together by a pair of struts 42 and 44 at each side which are pivotally connected about a rod 46. In a well known manner, the upper frame can be moved relative to the lower frame by pivotal movement occurring about the struts 42 and 44 to cause the upper frame 38 to rest on the lower frame. As shown in Figure 2, the upper frame includes four downwardly extending sockets 48 that rest on spigots 50 mounted on the top of arms 52. The lower ends of the arms 52 are connected to wheels 54 that support the stretcher trolley. Accordingly, in this position, all of the weight of the patient is taken by the four lower wheels 54 and thus all of the weight of the upper frame and any patient located thereon is transmitted through the sockets 48 to the spigots 50.

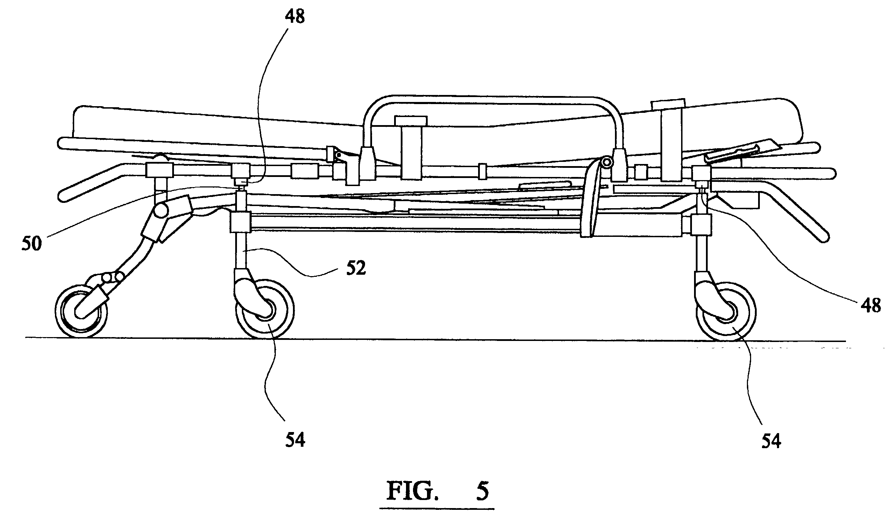

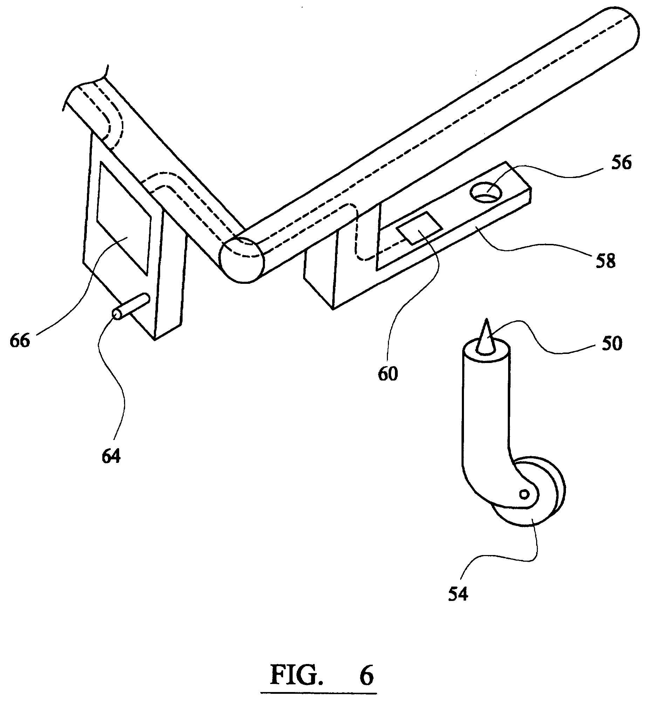

In Figures 4 and 5, the sockets 48 are shown as being directly connected to the upper frame. Figure 6 shows a modification that is effected at each socket. In this modification, a socket 56 comprising an opening is located on the end of a horizontally extending arm 58 with the arm then being connected to the upper frame 38 at a location spaced laterally from the socket 56. Accordingly, when the upper frame is supported directly on the lower frame, the spigot 50 extends partially through the opening 56 and the arm 58 is caused to undergo stress and a slight deflection. Load cells or strain gauges 60 are provided on each arm 58 such that the stress induced on each arm is able to be measured.

A wire connection extends through the arm, into the hollow tubular construction of the upper frame to a common control and display device 62. The device 62 includes an operating button 64 which, when actuated causes a readout, as in any of the modifications referred to above, to be given on the screen 66. The control and display device 62 is connected to the upper frame and depends downwardly therefrom.

The control and display device 62 is able to pick up the stresses induced in each arm 58 and give an indication, for instance comprising the exact weight of a person on the trolley, after the control in the device 62 has taken into account the inherent weight present in the upper frame that will in any event produce a small strain on each arm 58.

In any of the above described devices, an audible or a visual warning may be given when a patient is over the designated weight.

In any of the above referred to embodiments, the safe working load where for instance a warning is given may be variable. For instance it may be set at 150 Kg for one stretcher and 180 Kg for another stretcher. Thus the safer working load can be varied in dependence upon the apparatus on which it is used or in dependence upon the load carrying abilities of the operators or both.

Any parts of the apparatus may be powered by battery means such as rechargeable or replaceable batteries.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extend to any novel one, or any novel combination, of the features disclosed in this specification (including any accompanying claims, abstract and drawings), or to any novel one, or any novel combination, of the steps of any method or process so disclosed.

## Claims

1. Patient support apparatus comprising patient support means arranged, in use, to support a patient and a plurality of monitoring means arranged, in use, to provide an indication of the weight of a patient on the support means.

2. Apparatus as claimed in Claim 1 including control means arranged to receive a signal from the monitoring means and to give an indication of the weight of a patient on the support means.

3. Apparatus as claimed in Claim 2 in which the control means are selectively operable.

4. Apparatus as claimed in Claim 2 or 3 including actuation means that are biased towards a position in which the control means does not give an indication of the weight of a patient on the support means with the actuation means being movable, against that bias, to a position in which the control means is arranged to give an indication of the weight of a patient on the support means.

5. Apparatus as claimed in any preceding claim in which the predetermined weight is arranged to be set at one of a plurality of values.

6. Apparatus as claimed in any preceding claim in which the control means is arranged to compensate for a signal given by the monitoring means before a patient is located on the stretcher.

7. Apparatus as claimed in any preceding claim in which a signal from each monitoring means is arranged to be added together.

8. Apparatus as claimed in any preceding claim in which the monitoring means comprises fluid monitoring means.

9. Apparatus as claimed in any preceding claim comprising a first support arranged to receive the weight of a patient on the support means with the first support being mounted on monitoring means.

10. Apparatus as claimed in Claim 9 in which the first support and the monitoring means comprise a unit.

11. Apparatus as claimed in any preceding claim in which, when the monitoring means comprises fluid monitoring means, each monitoring means includes a portion that is movable downwardly to increase pressure on a fluid when a patient is supported on the support means.

12. Apparatus as claimed in any preceding claim in which each monitoring means comprises a strain gauge.

13. Apparatus as claimed in any preceding claim in which the apparatus includes projections that are arranged to be supported on further portions of the apparatus with means for monitoring the strain on the projections to provide an indication of the weight of a patient on the support means.

14. Apparatus as claimed in Claim 13 in which the projections are movable from the position in which they are spaced from the supports to a position in which they are located on the supports.

15. Apparatus as claimed in Claim 13 or 14 in which the projections are secured to an upper frame of a stretcher trolley which upper frame is movable from a raised to a lowered position in which, in the lowered position, the projections are located on the supports.

16. Patient support apparatus as claimed in any of the preceding claims comprising patient transport means.

17. A method of monitoring patient support apparatus comprising locating a patient on a support of the apparatus and monitoring the weight of the patient with a plurality of monitoring means to provide an indication of the weight of the patient on the support.

18. A method as claimed in Claim 17 comprising using control means to receive a signal from the monitoring means and giving an indication of the weight of the patient on the support.

19. A method as claimed in Claim 17 or 18 comprising giving a warning when the weight of a patient exceeds a predetermined weight.

20. A method as claimed in Claim 19 comprising varying the value of the predetermined weight.

21. A method as claimed in any of Claims 17 to 20 comprising taking the weight of the apparatus exerted on the monitoring means into account such that only the weight of the patient is monitored.

22. A method as claimed in any of Claims 17 to 21 comprising receiving different signals from different monitoring means in dependence upon where the patient is located on the support in order to give an indication of the weight of the patient on the support regardless of where on the support the patient is located.

23. A method as claimed in any of Claims 17 to 22 comprising supporting the support with each of the monitoring means and causing fluid in each of the monitoring means to have their pressure increased when the weight above a particular monitoring means is increased.

24. A method of monitoring patient support apparatus when the patient support apparatus is as claimed in any of Claims 1 to 16.
